# EUROPEAN PATENT SPECIFICATION

(11) **EP 0 395 453 B1**
(45) Date of publication and mention of the grant of the patent: **13.07.1994**
(21) Application number: 90304696.9
(22) Date of filing: 30.04.1990
(51) Int. Cl.: H02N 13/00, C10M 171/00, F16D 13/00, F16K 31/02

(54) **Electrode for electroviscous fluid**
Elektrode für eine elektroviskose Flüssigkeit
Electrode pour un fluide électrovisqueux

(30) Priority: 28.04.1989 JP 110497/89
(43) Date of publication of application: 31.10.1990
(73) Proprietor: Tonen Corporation, Tokyo 107 (JP)
(72) Inventor: Kanbara, Makoto, c/o Tonen Corp. Corporate, Ooi-machi, Iruma-gun, Saitama 354 (JP); Hayafune, Masahiko, c/o Tonen Corp. Corporate, Ooi-machi, Iruma-gun, Saitama 354 (JP); Tomizawa, Hirotaka, c/o Tonen Corp. Corporate, Ooi-machi, Iruma-gun, Saitama 354 (JP); Arai, Katsuya, c/o Tonen Corp. Corporate, Ooi-machi, Iruma-gun, Saitama 354 (JP)
(74) Representative: Diamond, Bryan Clive

(56) References cited:
- EP-A- 0 381 198
- CH-A- 399 093
- SOVIET INVENTIONS ILLUSTRATED, week 8451, 6th February 1985, section chemical,accession no. 84-317734, H01, Derwent Publications Ltd, London, GB; & SU-A-1090 863 (KAZA MINERAL RAW MA)

## Description

The present invention relates to an electrode for applying voltage on electroviscous fluid, the viscosity of which can be controlled by varying the voltage, and in particular to an electrode for applying voltage to electroviscous fluid, which can be utilized for electric control of mechanical devices such as clutches, valves or shock absorbers.

Electro-rheological fluid or electroviscous fluid, in which the viscosity of the fluid is changeable by the application of voltage, has been known for many years (Duff, A.W., Physical Review, Vol. 4, No. 1 (1896) 23). Early studies on electroviscous fluids were concentrated on the system containing liquid only, and the effect was not strong enough. Later, studies have been made on the electroviscous fluid of a solid disperse system, where a considerable electroviscous effect could be obtained.

For example, Winslow proposed an electroviscous fluid, using parafin, silica gel powder and adding water to make the system slightly electroconductive (Winslow, W.M., J. of Applied Physics, Vol. 20 (1949) 1137). From this study by Winslow, the electroviscous (electro-rheological) effect of the electroviscous fluid is called the ER effect or Winslow effect.

On the other hand, study has also been made of the mechanism of the thickening effect (ER effect) in the electroviscous fluid. For example, Klass reported that each particle, i.e. the dispersoid in electroviscous fluid, generates the induced polarization of the electric double layer in an electrical field and this was the primary cause of such effect (Klass, D.L., et al., J. of Applied Physics, Vol.38, No. 1 (1967) 67). If this is explained from the principle of the electric double layer, the ions absorbed on the dispersoids (such as silica gel) are evenly arranged on the outer surface of the dispersoid when E (electric field) = 0, while ion distribution was deviated when E (electric field) = finite value and each particle exerts an electrostatic action on each other in the electric field. Thus, each particle forms a bridge between electrodes and begins to have a shearing resistance to stress, i.e. ER effect.

However, a metal electrode such as copper is used as the electrode to apply voltage to the electroviscous fluid of conventional type, whereas, when voltage is applied to an electroviscous fluid, constant current flows and an electrochemical reaction on the electrode inevitably occurs by the formation of the bridge along with the dipole formation of dispersoid particles. Therefore, the conventional type of electroviscous fluid system has had the following problems:
(1) By the electrochemical consumption of water or polyhydric alcohol, used as the polarization promoting agent, the electroviscous fluid is electrochemically deteriorated, and the thickening effect is decreased.
(2) By electrochemical reaction, metal electrodes are eluted and corroded, and this reduces the durability of the electroviscous fluid system. This imposes serious restriction on the metal electrode, such as a copper electrode, for the electroviscous fluid system.

It is an object of this invention to provide an electrode for an electroviscous fluid, by which it is possible to maintain a stable ER effect up to a high temperature range and to obtain higher durability.

The electrode according to the present invention is intended to apply voltage to an electroviscous fluid having an electrically insulating fluid and porous solid particles as principal components.

When a voltage is applied to such an electroviscous fluid, solid particles therein, such as silica gel, are polarized in the electrically insulating electroviscous fluid, and a bridge is formed by solid particles between the electrodes. By the formation of the bridge, a thickening effect, proportional to the applied voltage, is generated in the electroviscous fluid, and the fluid begins to have a shearing resistance to stress. In such electroviscous fluid, an electrically conductive polarization promotion agent is added to promote the polarization of solid particles. However an electrochemical reaction occurs and this adversely affects the service life of the electroviscous fluid and electrodes. Conventionally, it was considered that when constant current was flowing, the bonding was strengthened for the bridge of solid particles in the electroviscous fluid and that this electrochemical reaction was unavoidable for an ER device.

The present inventors have found that the flow of electric current is not necessarily required for the polarization of solid particles and for the formation of the bridge, and that an ER effect can be given by an electroviscous fluid when the electrode used is laminated with an insulating layer.

The prior art defined by the preamble of claim 1 is known from CH-A-399 093.

According to the invention we provide an electrode suitable for applying a potential to an electroviscous fluid, said electrode comprises a metallic electrode member the surface of which would contact said fluid, said electrode member is covered with an electrically insulating layer which is made of an organic material which is resistant to the electroviscous fluid at temperatures up to 150°C and has a thickness of 0.01 to 50 »m.

By laminating the insulating layer on the electrode, the electrode accordding to this invention has high durability within a wide temperature range up to a high temperature. By the use of such electrodes, it is possible to provide an electroviscous fluid system of high durability because the viscosity hardly changes at all over a period of about 50 hours.

Therefore, the electrode for electroviscous fluid according to the present invention is useful for application to the control equipment, utilizing the viscosity change, and an ER device of extremely high durability can be provided.

In the accompanying drawings:
Fig. 1 is a schematic illustration of an embodiment of an electrode for electroviscous fluid according to the present invention;
Fig. 2 is a cross-sectional view of the electrode shown in Fig. 1;
Fig. 3 is a schematic illustration of another embodiment of an electrode of this invention; and
Fig. 4 is a cross-sectional view of the electrode shown in Fig. 3.

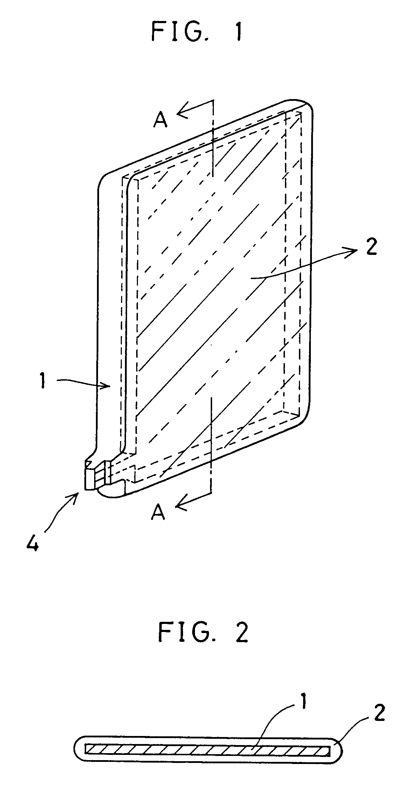

In Figs. 1 and 2 there is seen an electrode 1 in the shape of a plate, which has desired rigidity; it is coated with an insulating layer 2, and provided with a projecting contact 4.

As the material of which the electrode is made, a metal such as copper, aluminium, gold, platinum, silver, iron, zinc, palladium, osmium, iridium, nickel, lead or tantalum can be used.

The organic insulating layer must have oil-resistance to the electroviscous fluid and heat-resistance for operation at a temperature as high as 150°C. As the material to form such organic insulating layer, thermoplastic engineering plastics such as a polyamide, polyacetal, polybutylene terephthalate, polyethylene terephthalate or reinforced polyethylene terephthalate, the non-crosslinked thermoplastic engineering plastics such as a polyether-sulfone, polyphenylene sulfide, polyallylate, polyamide imide or polyether ether ketone, the non-crosslinked compression molding engineering plastics such as a polyimide, polyallylate or fluror-resin, the crosslinked engineering plastics such as a polyamide-bismaleimide, polytriazine, crosslinked polyamide imide, polyvinylphenol/epoxy, Friedel-Craft resin/epoxy or heat-resistant epoxy, or a blended mixture of these plastics (such as a polymer alloy or copolymer), or material reinforced by glass fibers or inorganic whiskers (such as carbon fibers) may be used.

The organic insulating layer can be formed by a chemical vapor deposition (CVD), physical vapor deposition (PVD), vacuum evaporation, spray coating, spin casting, electrostatic coating, dipping or brush coating method. Also, the layer may be attached using a plastics film as adhesive; or the so-called enamel coating by coating a drying oil and by baking, or an insulating film such as a formal coating film produced by coating polyvinyl formal and baking may be used.

When an engineering plastic such as a polyimide, polyamide imide, polyparabanic acid (PPA) or varnish is used as insulating material, a spin casting, spray coating, CVD or PVD method may be employed to form the insulating layer. When a heat-resistant, weather-resistant and electrically insulating paint, such as a fluoro resin paint or epoxyphenol resin paint is used, spin casting, spray coating or electrostatic coating may be used to form the layer.

If the electrode is of a complicated shape, such as a curved surface, an engineering plastics such as a polyimide, PPA, or a varnish, or a fluoro-resin paint or epxoyphenol resin paint may be applied by spray coating or dipping.

The thickness of the insulating layer is 0.01 - 50 »m, or preferably, 0.1 - 20 »m.

If the layer is thin, pin holes or cracks may occur when the film is formed, and the insulating effect is reduced. Therefore, the film thickness must be at least 0.01 »m or more. If it is too thick, the electrostatic action of the particles and the electrodes is suppressed, and voltage loss on the insulating layer is increased. Thus, voltage is not effectively distributed to the electroviscous fluid, and a thickness of more than 50 »m is not desirable.

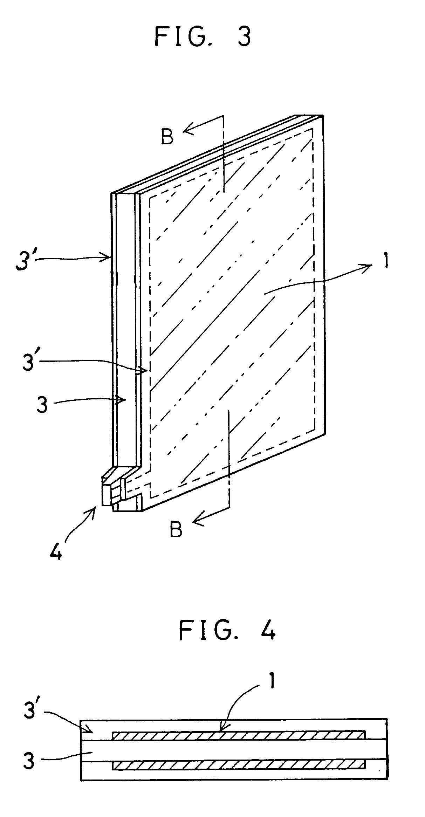

In the embodiment of Figs. 3 and 4, the electrode contains a pair of metal plates, parallel to each other and separated by organic insulating material which also encloses them. It can be constructed by taking a central insulating sheet 3, placing a metal film 1 of thickness 1.0 to 20 »m on each side thereof, and covering the films with further insulating sheets 3'. The metal and insulating components are shaped at one corner to form the electrical contact 4 for connection of power to both the metal plates. Alternatively, the metal 1 can be deposited on the support sheet 3 by vacuum evaporation or electroless plating (which is useful for electrodes of complicated shape such as curved), followed by positioning of the sheets 3'. This form of electrode can be of higher efficiency in use.

Electroviscous fluids in which the electrodes of the invention can be used are now described. The fluids disclosed in our application 90304402 published as EP-A-0395359 can be used. Details of suitable components are as follows:

The electrically insulating fluid can be any suitable liquid, for example, mineral oils and synthetic lubricant oils, such as a paraffin type mineral oil, naphthene type mineral oil, poly-α-olefin, polyalkyleneglycol, silicone, diester, polyol-ester, phosphoric acid ester, silicon compound, fluorine compound or polyphenylether. An electrically insulating fluid with the viscosity range of 5 - 300 cSt at 40°C may be used.

Porous solid particles as hitherto known may be used as a dispersoid, for example, silica gel, moisture-containing resin, diatomaceous earth, alumina, silica-alumina, zeolite, an ion exchange resin or cellulose. Porous solid particles, of a particle size of 10 nm - 200 »m are normally used in a ratio of 0.1 - 50 wt % in the fluid. If the proportion of particles is less than 0.1 wt%, the ER effect is lowered, and if it exceeds 50 wt%, the dispersion property of the particles is reduced, and this is also not desirable.

A dispersing agent may be included, to disperse the porous solid particles uniformly and stably in the electrically insulating fluid. Known dispersing agents can be used, for example, sulphonates, phenates, phosphonates, succinic acid imide, amines or non-ionic dispersing agents, e.g magnesium sulfonate, calcium sulphonate, calcium phosphonate, polybutenyl succinic acid imide, sorbitan monooleate or sorbitan sesqui-oleate. Normally, these substances are used in a proportion of 0.1 - 10 wt%, while they may not be needed if the porous solid particles are easily dispersed.

A polyhydric alcohol, acid and salt and/or basic components may be added. In such case, it is preferable to use an alcohol-resistant or acid-resistant material as the insulating layer. A polyhydric alcohol, acid, salt or basic components may be added alone to improve the ER effect. Polyhydric alcohol component can improve the ER effect at a high temperature, while acid components can increase the polarization effect. Also, these two components can be used simultaneously, and cumulative effects can be achieved with an ER effect in the high temperature range and an increased polarization effect.

As a polyhydric alcohol,a dihydric alcohol or trihydric alcohol are effective, and ethylene glycol, glycerin, propanediol, butanediol or hexanediol may be used.

As acid components, inorganic acids such as sulfuric acid, hydrochloric acid, nitric acid, perchloric acid, chromic acid, phosphoric acid, boric acid, or organic acids such as acetic acid, formic acid, propionic acid, lactic acid, isolactic acid, valeric acid, oxalic acid, malonic acid are useful.

As the salt, any compound consisting of a metallic or basic radical (such as NH₄⁺, N₂H₅⁺) and acid radical may be used. Above all, it is preferable to use a compound which dissolves in a polyhydric alcohol and water and is dissociated, for example, a halogenated compound of an alkali metal and alkali earth metal, which forms typical ionic crystals, or an alkali metal salt of an organic acid. As such types of salt, there are LiCl, NaCl, KCl, MgCl₂, CaCl₂, BaCl₂, LiBr, NaBr, KBr, MgBr₂, LiI, Hal, KI, AgNO₃, Ca(NO₃)₂, NaNO₂, NH₄NO₃, K₂SO₄, Na₂SO₄, NaHSO₄, (NH₄)₂SO₄ or a salt of an alkali metal such as formic acid, acetic acid, oxalic acid or succinic acid.

A base which may be used in the fluid may be a hydroxide of an alkali metal or alkali earth metal, a carbonate of an alkali metal or an amine , preferably one which dissolves in a polyhydric alcohol or in polyhydric alcohol and water and is dissociated. As bases of this type, there are NaOH, KOH, Ca(OH)₂, Na₂CO₃, NaHCO₃, K₃PO₄, aniline, alkylamines and ethanolamine. The salts and bases as described above can be simultaneously used in this invention.

It is preferable to use an acid, salt or base in a proportion of 0.01 - 5 wt% in the electroviscous fluid. If it is less than 0.01 wt%, the ER effect is low and if it exceeds 5 wt%, the electric current flows too easily, and the power consumption is increased.

An antioxidant may be added, to prevent oxidation of the electrically insulating liquid and to stop oxidation of a polyhydric alcohol, which is a polarizing agent. It is preferable to use an antioxidant inactive to the polarizing agent and porous solid particles. Known phenol type or amine type antioxidants can be used, such as phenol type antioxidants such as 2,6-di-t-butylparacresol, 4,4′-methylene-bis (2,6-di-t-butylphenol), 2,6-di-t-butylphenol, or amine type antioxidants such as dioctyldiphenylamine, phenyl-α-naphthylamine, alkylphenyl-amine or N-nitrosodiphenylamine.

It is naturally possible to also include water in such a proportion as not to reduce the ER effect in the electroviscous fluid.

The electrode of the invention and its use will be illustrated by the following Examples and a comparative example.

### Example 1

As shown in Figs 1 and 2, drying oil was spray coated on a copper electrode 1 having an electrical contact 4. After baking at 150°C, the insulating layer 2 of enamel quality was formed in a thickness of 5 »m.

### Example 2

By the same procedure as in Example 1, polytetrafluoroethylene was dissolved in a mixed solution of 1,1,1-trichloroethane, 1,1,2-trichloro-1,2,2-trichloroethane and tetrabutyl titanate, and this solution was coated on a copper electrode by spray coating. After melting the coating at 350°C, an insulating layer of thickness 20 »m was formed.

### Example 3

On an aluminum substrate, a polyethylene-terephthalate film 5 »m thick was attached using an epoxy adhesive, and an insulating layer 10 »m thick in the same shape as in Example 1 was obtained.

### Example 4

As shown in Figs. 3 and 4, a thin copper film of thickness 15 »m was adhered on both sides of a polyethylene-terephthalate support 3 of thickness 0.5 mm by adhesive in such manner that the copper films did not extend to the edges of the support except where they extended to the tip of the contact unit 4. Then, a polyethylene terephthalate film of thickness 6 »m was adhered to cover the outer face of each copper film.

### Example 5

The same procedure as in Example 4 was repeated except that the outer covering was a sprayed coating of a drying oil which, after baking at 150°C, formed an insulating layer of enamel quality of thickness 5 »m.

### Comparative Example 1

A copper electrode was used as shown in Figs. 1 and 2, without any insulating coating.

### Comparative Example 2

By the same procedure as in Example 1, an xylene solution containing silicon nitride (polysilazane of average molecular weight of 1500 - 1700) 20 wt% was coated on a SUS electrode by the immersion method. After baking at 600°C, an insulating layer of thickness 1.0 »m was formed.

### Comparative Example 3

By the same procedure as in Example 5, a thin nickel film was formed by electroless plating on both sides of an alumina substrate of thickness 0.7 mm, and an outer alumina coating was applied by plasma CVD method in a thickness of 3 »m.

The composition of an electroviscous fluid in which the electrodes were tested was:

| | |
|---|---|
| Mineral oil | 89 wt% |
| Silica gel | 6 wt% |
| Ethylene glycol | 0.5 wt% |
| Acetic acid | 0.5 wt% |
| Succinic acid imide | 4 wt% |

The viscosity of the mineral oil was adjusted in such manner that all samples were of 80 cSt at 40°C. The operating conditions and evaluation methods for the electroviscous fluid were as follows:
With the electroviscous fluid at 40°C and 90°C, the following parameters were measured and evaluated using a voltage-applicable rotation viscosimeter:
- Responsiveness:
   Evaluated by the time (seconds) until viscosity is stabilized when an AC electric field is changed from 0 to 2.0 x 10⁶ (V/m).
- Reproducibility:
   Evaluated by the ratio of viscosity fluctuation at the electric field of 2.0 x 10⁶ (V/m) when the AC electric field is changed repeatedly in the cycle of 1 - 2.0 x 10⁶ (V/m) - 0.
- Durability:
   Evaluated by the variation (%) of viscosity over time during a period of 50 hours when the AC electric field is stabilized at 2.0 x 10⁶ (V/m).
- Electroviscous thickening effect:
   Evaluated by the ratio of the increase of viscosity in an AC electric field of 2.0 x 10⁶ (V/m) compared with that in the electric field at zero.

The results of the evaluation are summarized in the following table. No change after measurement was observed on the electrodes.

| | | Responsiveness (sec.) | Reproducibility (%) | Durability (%) | Electroviscous effect (ratio) |
|---|---|---|---|---|---|
| Example 1 | 40°C | 1 or less | ±2 | 100 | 5 |
| | 90°C | 1 or less | ±2 | 96 | 7 |
| Example 2 | 40°C | 1 or less | ±2 | 100 | 4 |
| | 90°C | 1 or less | ±2 | 98 | 6 |
| Example 3 | 40°C | 1 or less | ±2 | 100 | 5 |
| | 90°C | 1 or less | ±2 | 98 | 7 |
| Example 4 | 40°C | 1 or less | ±2 | 100 | 4 |
| | 90°C | 1 or less | ±2 | 98 | 6 |
| Example 5 | 40°C | 1 or less | ±2 | 100 | 5 |
| | 90°C | 1 or less | ±2 | 98 | 7 |
| Comparative Example 1 | 40°C | 1 or less | ±2 | 20 | 1.8 |
| | 90°C | 1 or less | ±2 | 10 | 1.6 |
| Comparative Example 2 | 40°C | 1 or less | ±2 | 100 | 5 |
| | 90°C | 1 or less | ±2 | 98 | 7 |
| Comparative Example 3 | 40°C | 1 or less | ±2 | 100 | 5 |
| | 90°C | 1 or less | ±2 | 97 | 8 |

## Claims

1. An electrode suitable for applying a potential to an electroviscous fluid, said electrode comprises a metallic electrode member (1) the surface of which would contact said fluid, said electrode member (1) is covered with an electrically insulating layer (2,3') characterised in that the electrically insulating layer (2,3') is made of an organic material which is resistant to the electroviscous fluid at temperatures up to 150°C and has a thickness of 0.01 to 50 »m.

2. An electrode as claimed in Claim 1, wherein the insulating layer (2,3') is made of a synthetic plastics material.

3. An electrode as claimed in Claim 1, wherein the insulating layer (2,3') was formed by baking a layer of a drying oil.

4. An electrode as claimed in Claim 1, 2 or 3, which contains a plurality of metallic electrode members separated from each other and all enclosed by the layer of electrically insulating material.

5. An electrode as claimed in Claim 4, which comprises a rigid insulating support (3) which bears on each side a metallic layer (1).

6. An electrode as claimed in Claim 5, wherein the support (3) is a ceramic or plastics material.

7. An electrode as claimed in any preceding claim, wherein the thickness of the insulating layer (2) is 0.1 to 20 »m.

8. An electrode as claimed in any preceding claim, when used in an electroviscous fluid.

## Patentansprüche

1. Eine Elektrode, geeignet zum Anlegen eines Potentials an ein elektroviskoses Fluid, wobei die Elektrode einen metallischen Elektrodenbestandteil (1) umfaßt, dessen Oberfläche das Fluid berühren würde, wobei der Elektrodenbestandteil (1) mit einer elektrisch isolierenden Schicht (2, 3') bedeckt ist, **dadurch gekennzeichnet**, daß die elektrisch isolierende Schicht (2, 3') aus einem organischen Material hergestellt ist, welches gegenüber dem elektroviskosen Fluid bei Temperaturen bis zu 150°C beständig ist, und die eine Dicke von 0,01 bis 50 »m besitzt.

2. Elektrode nach Anspruch 1, **dadurch gekennzeichnet**, daß die isolierende Schicht (2, 3') aus einem synthetischen Kunststoffmaterial hergestellt ist.

3. Elektrode nach Anspruch 1, **dadurch gekennzeichnet**, daß die isolierende Schicht (2, 3') durch Einbrennen einer Schicht eines trocknenden Öls gebildet wurde.

4. Elektrode nach Anspruch 1, 2 oder 3, **dadurch gekennzeichnet**, daß sie eine Mehrzahl von metallischen Elektrodenbestandteilen enthält, die jeweils voneinander getrennt sind, und alle Elektrodenbestandteile von der Schicht aus elektrisch isolierendem Material umgeben sind.

5. Elektrode nach Anspruch 4, **dadurch gekennzeichnet**, daß sie einen starren isolierenden Träger (3) umfaßt, der auf jeder Seite eine metallische Schicht (1) trägt.

6. Elektrode nach Anspruch 5, **dadurch gekennzeichnet**, daß der Träger (3) ein Keramik- oder Kunststoffmaterial ist.

7. Elektrode nach jedem der vorhergehenden Ansprüche, **dadurch gekennzeichnet**, daß die Dicke der isolierenden Schicht (2) 0,1 bis 20 »m beträgt.

8. Elektrode nach jedem der vorhergehenden Ansprüche zur Verwendung in einem elektroviskosen Fluid.

## Revendications

1. Electrode adaptée pour appliquer un potentiel sur un fluide électrovisqueux, cette électrode comprenant un élément d'électrode métallique (1) dont la surface serait en contact avec le fluide, cet élément d'électrode (1) étant recouvert par une couche électriquement isolante (2,3'), caractérisée en ce que la couche électriquement isolante (2,3') est constituée d'un matériau organique qui résiste aux fluides électrovisqueux à des températures pouvant atteindre 150°C et qui a une épaisseur de 0,01 à 50 »m.

2. Electrode selon la revendication 1, dans laquelle la couche isolante (2,3') est en une matière plastique synthétique.

3. Electrode selon la revendication 1, dans laquelle la couche isolante (2,3') est formée en cuisant une couche d'huile siccative.

4. Electrode selon l'une des revendications 1 à 3, qui contient une multiplicité d'éléments d'électrode métalliques séparés les uns des autres, tous étant enfermés par la couche de matériau électriquement isolant.

5. Electrode selon la revendication 4, qui comprend un support isolant rigide (3) qui porte sur chaque côté une couche métallique (1).

6. Electrode selon la revendication 5, dans laquelle le support (3) est un matériau céramique ou plastique.

7. Electrode selon l'une des revendications précédentes, dans laquelle l'épaisseur de la couche isolante (2) est comprise entre 0,1 et 20»m.

8. Electrode selon l'une des revendications précédentes, utilisée dans un fluide électrovisqueux.
